# EUROPEAN PATENT APPLICATION

(11) **EP 3 131 088 A1**
(43) Date of publication of application: **15.02.2017**
(21) Application number: 16168514.4
(22) Date of filing: 05.05.2016
(51) Int. Cl.: G09G 3/36, G09G 3/34

(54) **LIQUID CRYSTAL DRIVE CIRCUIT, BACKLIGHT CIRCUIT, TERMINAL, DEVICE AND METHOD**

(30) Priority: 13.08.2015 CN 201510498541
(71) Applicant: Xiaomi Inc., Beijing 100085 (CN)
(72) Inventor: LI, Guosheng, Haidian District Beijing 100085 (CN); FENG, Wei, Haidian District Beijing 100085 (CN); LIU, Shanrong, Haidian District Beijing 100085 (CN)
(74) Representative: Sadler, Peter Frederick

(57) **Abstract**

The present disclosure discloses a liquid crystal driver circuit (340), a backlight circuit, a terminal, a device, and a method, and belongs to technical field of display. According to the present disclosure, an output start position and output times of a scanning voltage are controlled through a scanning driver chip (2) under a window display mode; a data line switch (4) corresponding to a data line (31) having no intersection with a window region is set into an off state; display content corresponding to a size of the window region is generated, and a gray-scale voltage corresponding to the display content is sent to each data line (31) having an intersection with the window region through a data driver chip (3); and a backlight with a lighting position having an intersection with the window region is controlled to emit light through a backlight circuit.

## Description

### TECHNICAL FIELD

The present disclosure relates to the technical field of displays, and more particularly, to a liquid crystal driver circuit, a backlight circuit, a terminal, a device and a method.

### BACKGROUND

Liquid crystal displays of mobile terminals are generally becoming bigger and bigger.

Because a liquid crystal display having a large area consumes more electricity, the related art provides a window display mode. Under the window display mode, information will only be displayed in a predetermined window region, rather than be displayed on the entire display area of the liquid crystal display. The window region is usually a relatively small rectangle region. Black is displayed on other region of the liquid crystal display excluding the window region, so that power consumption is reduced.

### SUMMARY

It has been appreciated by the present inventors that there is a further power waste problem caused by the fact that both data lines and scanning lines in a non-window region are in a working state and backlights in the non-window region are also in a light emitting state under a window display mode. To solve this problem the present disclosure provides a liquid crystal driver circuit, a backlight circuit, a terminal, a device and a method. The relative technical solutions are as follows.

According to a first aspect of embodiments of the present disclosure, there is provided a liquid crystal driver circuit, including: a scanning driver chip, m scanning lines distributed by rows, a data driver chip, n data lines distributed by columns, m*n liquid crystal units distributed by rows and columns, and at least one data line switch;
the scanning driver chip including m scanning pins, and the scanning pins being connected to the corresponding scanning lines one by one;
each of the scanning lines being connected to gates of the liquid crystal units in the corresponding row;
the data driver chip including n data pins, and the data pins being connected to the corresponding data lines one by one;
each of the data lines being connected to drains of the liquid crystal units in the corresponding column; and
the data line switch being arranged between at least one of the data lines and the corresponding data pin.

Optionally, the number of the data line switches is n, and the data line switch is arranged between each of the data lines and the corresponding data pin.

Optionally, the data line switch is arranged between the data line satisfying a first condition and the corresponding data pin;
the first condition being that the row where the data line locates has no intersection with a window region, being a region of the screen in which content is being, or is to be, displayed.

According to a second aspect of embodiments of the present disclosure, there is provided a backlight circuit, including: a plurality of row backlights distributed in a row border region of a liquid crystal display and a plurality of column backlights distributed in a column border region of the liquid crystal display;
at least two of the row backlights being connected in series to form a row backlight string;
and/or,
at least two of the column backlights being connected in series to form a column backlight string.

Optionally, at least two of the row backlights satisfying a second condition are connected in series to form a row backlight string;
the second condition being that both lighting positions of the at least two of the row backlights in a column direction have an intersection with a window region, or have no intersection with a window region.

Optionally, at least two of the row backlights satisfying a second condition are connected in series to form a row backlight string;
the second condition being that both lighting positions of the at least two of the row backlights in a column direction from top to bottom or from bottom to top have an intersection with a window region, or have no intersection with a window region.

Optionally, at least two of the column backlights satisfying a third condition are connected in series to form a column backlight string;
the third condition being that both the lighting positions of the at least two of the column backlights in a row direction have an intersection with a window region, or have no intersection with a window region.

According to a third aspect of embodiments of the present disclosure, there is provided a terminal, including:
a display driver integrated circuit and a liquid crystal driver circuit connected to the display driver integrated circuit, the liquid crystal driver circuit being the liquid crystal driver circuit as provided in the first aspect;
and/or,
a backlight and a backlight circuit connected to the backlight, the backlight circuit being the backlight circuit as provided in the second aspect.

According to a fourth aspect of embodiments of the present disclosure, there is provided a display method applied to the terminal as provided in the third aspect, including:
sending a scanning voltage to a scanning line having an intersection with a window region through a scanning driver chip under a window display mode;
setting a data line switch corresponding to a data line having no intersection with the window region to be an off state; and
sending a gray-scale voltage to the data line having an intersection with the window region through the data driver chip.

Optionally, the sending the scanning voltage to the scanning line having an intersection with a window region through the scanning driver chip includes:
controlling an output start position and output times of the scanning voltage through the scanning driver chip;
the output start position being a scanning pin corresponding to a first scanning line having an intersection with a window region according to a sequence from top to bottom; and the output times being equal to the number of the scanning lines having an intersection with a window region.

Optionally, the sending the gray-scale voltage to the data line having an intersection with a window region through the data driver chip includes:
generating display content corresponding to a size of a window region; and
sending the gray-scale voltage corresponding to the display content to each of the data lines having an intersection with the window region through the data driver chip.

According to a fifth aspect of embodiments of the present disclosure, there is provided a display method applied to the terminal as provided in the third aspect, including:
controlling a backlight with a lighting position whose lighting position has an intersection with a window region to emit light under a window display mode; and controlling a backlight whose lighting position has no intersection with the window region to be in an off state;
the backlight being a single backlight, and/or a backlight in a row backlight string, and/or a backlight in a column backlight string.

Optionally, the controlling the backlight with the lighting position having an intersection with a window region to emit light includes:
acquiring position information of the window region;
acquiring position information of each backlight; and
controlling the backlight having an intersection with the window region to emit light according to the position information of the window region and the position information of each backlight.

According to a sixth aspect of embodiments of the present disclosure, there is provided a display device applied to the terminal as provided in the third aspect, including:
a scanning module configured to send a scanning voltage to a scanning line having an intersection with a window region through a scanning driver chip under a window display mode;
a setting module configured to set a data line switch corresponding to a data line having no intersection with the window region into an off state; and
a sending module configured to send a gray-scale voltage to the data line having an intersection with the window region through the data driver chip.

Optionally, the sending the scanning voltage to the scanning line having an intersection with the window region through the scanning driver chip includes:
the scanning module is configured to control an output start position and output times of the scanning voltage through the scanning driver chip;
the output start position being a scanning pin corresponding to a first scanning line having an intersection with the window region according to a sequence from top to bottom; and the output times being equal to the number of the scanning lines having an intersection with the window region.

Optionally, the sending the gray-scale voltage to the data line having intersection with the window region through the data driver chip includes:
generating display content corresponding to a size of the window region; and
sending the gray-scale voltage corresponding to the display content to each of the data lines having an intersection with the window region through the data driver chip.

According to a seventh aspect of embodiments of the present disclosure, there is provided a display device applied to the terminal as provided in the third aspect, including:
a first control module configured to control a backlight whose lighting position has an intersection with a window region to emit light under a window display mode; and
a second control module configured to control a backlight whose lighting position has no intersection with the window region to be in an off state;
the backlight being a single backlight, and/or a backlight in a row backlight string, and/or a backlight in a column backlight string.

Optionally, the controlling the backlight with the lighting position having an intersection with the window region to emit light includes:
acquiring position information of the window region;
acquiring position information of each backlight; and
controlling the backlight having an intersection with the window region to emit light according to the position information of the window region and the position information of each backlight.

Any aspects of the invention may be combined with any other aspects of the invention. In particular, any aspects relating to controlling data lines may be combined with any aspects relating to controlling a backlight.

The technical solutions provided by embodiments of the present disclosure have the following beneficial effects:
by providing the liquid crystal driver circuit, the data line switch being arranged between the data line in the liquid crystal driver circuit and the data driver chip; closing the data line having no intersection with the window region under the window display mode, and only scanning the scanning lines having an intersection with the window region, the problem of arranging the data line switch between at least one of the data lines and the corresponding data pin under the window display mode in the background art is solved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a structure diagram of a liquid crystal driver circuit provided by the background art;
Fig. 2A is a structure diagram of a liquid crystal driver circuit, according to an exemplary embodiment of the present disclosure;
Fig. 2B is a structure diagram of a liquid crystal driver circuit, according to another exemplary embodiment of the present disclosure;
Fig. 3 is a structure diagram of a terminal, according to an exemplary embodiment of the present disclosure;
Fig. 4 is a flow chart of a display method, according to an exemplary embodiment of the present disclosure;
Fig. 5 is a flow chart of a display method, according to another exemplary embodiment of the present disclosure;
Fig. 6A is a structure diagram of a backlight circuit, according to an exemplary embodiment;
Fig. 6B is a structure diagram of a backlight circuit, according to another exemplary embodiment;
Fig. 6C is a structure diagram of a backlight circuit, according to further another exemplary embodiment;
Fig. 7 is a structure diagram of a terminal, according to an exemplary embodiment of the present disclosure;
Fig. 8 is a flow chart of a display method, according to an exemplary embodiment of the present disclosure;
Fig. 9 is a flow chart of a display method, according to an exemplary embodiment of the present disclosure;
Fig. 10 is a block diagram of a display device, according to an exemplary embodiment;
Fig. 11 is a block diagram of a display device, according to an exemplary embodiment;
Fig. 12 is a block diagram of a display device, according to an exemplary embodiment of the present disclosure; and
Fig. 13 is a block diagram of a display device, according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

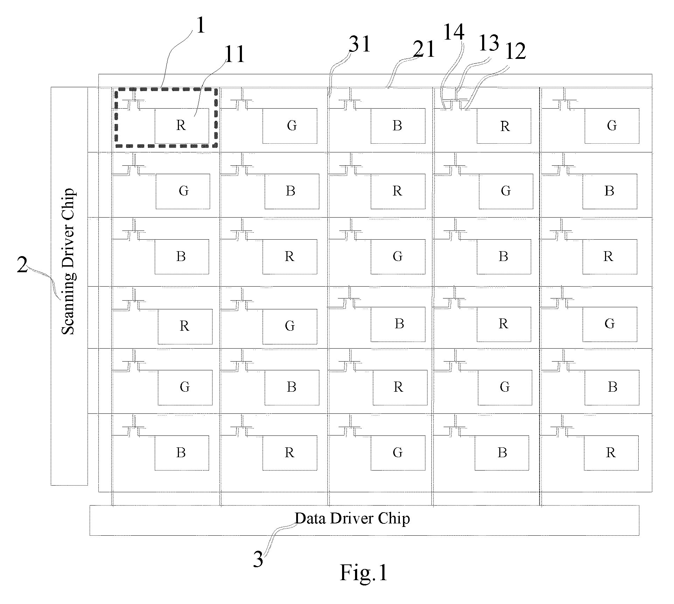

Fig. 1 is a structure diagram of a liquid crystal driver circuit provided by the background art. As shown in Fig. 1, the liquid crystal driver circuit includes m*n liquid crystal units 1, a scanning driver chip 2, m scanning lines 21, a data driver chip 3 and n data lines 31.

The liquid crystal units 1 are arranged in an array of m rows and n columns. Each liquid crystal unit 1 includes: a liquid crystal pixel electrode 11 and a TFT (Thin Film Transistor) switching element. The TFT switching element includes a source 12, a gate 13 and a drain 14. The liquid crystal pixel electrode 11 is connected to the source 12 in the TFT switching element. The liquid crystal pixel electrode 11 may be a red liquid crystal pixel electrode R, a green liquid crystal pixel electrode G or a blue pixel electrode B.

The scanning driver chip 2 includes m scanning pins, and each scanning pin is connected to one scanning line 21. Each row of liquid crystal units 1 correspond to one scanning line 21, and the scanning line 21 is connected to the gates 13 of the liquid crystal units 1 in the corresponding row.

The data driver chip 3 includes n data pins, and each data pin is connected to one data line. Each column of liquid crystal units 1 corresponds to one data line 31, and the data line 31 is connected to the drains 14 of the liquid crystal units 1 in the corresponding column.

When the liquid crystal driver circuit works, the scanning driver chip 2 sends a scanning signal to the scanning lines 21 row by row with regard to a frame of image, so that the scanning line 21 receiving the scanning signal sets the corresponding row of liquid crystal units in a working state. Meanwhile, the data driver chip 3 sends a gray-scale voltage of pixels corresponding to the row of liquid crystal units to the corresponding drain 13 through the data line 31, so that the data driver chip 3 saves the corresponding gray-scale voltage in the liquid crystal pixel electrode 11, in this way, each liquid crystal pixel electrode 11 displays a gray-scale at a corresponding level, thus displaying one frame of image.

In the liquid crystal driver circuit described in Fig. 1, under a window display mode, target content will be displayed in a window region, and black will be displayed in a non-window region. The window region refers to a partial region in a liquid crystal display where target content needs to be displayed. The window region is smaller than the entire display region of the liquid crystal display, and the window region is usually a rectangle. The target content may be system time, short message notification, or the like.

However, with regard to the liquid crystal driver circuit, under the window display mode, all the data lines 2 and the scanning lines 3 are in a normal working state, and the non-window region is displayed as black, so that the power consumption of the liquid crystal display device is still large.

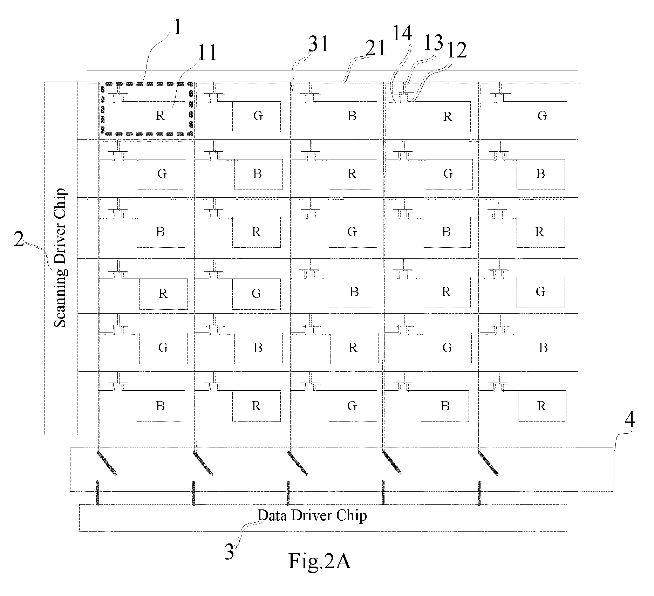

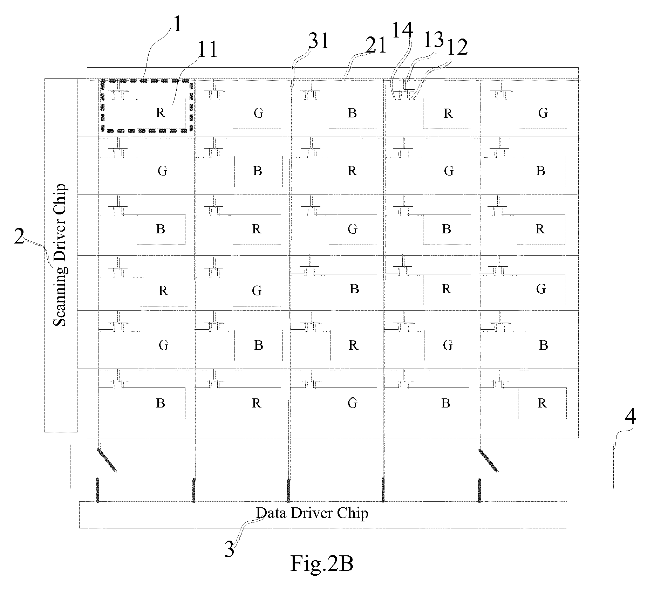

Fig. 2A and Fig. 2B are block diagrams of a liquid crystal driver circuit, according to an exemplary embodiment. As shown in Fig. 2A, the liquid crystal driver circuit includes: m*n liquid crystal units 1 distributed by rows and columns, a scanning driver chip 2, m scanning lines 21 distributed by rows, a data driver chip 3, n data lines 31 distributed by columns and at least one data line switch 4.

The liquid crystal units 1 are arranged in an array including m rows and n columns. Each liquid crystal unit 1 includes: a liquid crystal pixel electrode 11 and a TFT switching element. The TFT switching element includes a source 12, a gate 13 and a drain 14. The liquid crystal pixel electrode 11 is connected to the source 12 in the TFT switching element. The liquid crystal pixel electrode 11 may be a red liquid crystal pixel electrode R, a green liquid crystal pixel electrode G or a blue pixel electrode B.

The scanning driver chip 2 includes m scanning pins, and the scanning pins are correspondingly connected to the scanning lines 21 one by one. Each row of liquid crystal units 1 correspond to one scanning line 21, and the scanning line 21 is connected to the gates 13 of the liquid crystal units 1 in the corresponding row.

The data driver chip 3 includes n data pins, and the data pins are connected to the data lines 31 one by one. Each column of liquid crystal units 1 corresponds to one data line 31, and each data line 31 is connected to the drains 14 of the liquid crystal units 1 in the corresponding column.

The data line switch 4 is arranged between at least one the data line 31 and the corresponding data pin.

In the embodiment of Fig. 2A, n data line switches 4 are arranged, and the data line switches 4 are arranged between each data line 31 and the data pin of the data driver chip 3. The data line switch 4 further includes a control terminal (not shown in the drawing). Optionally, each data line switch is switched on or off according to a received control signal. When the data line switch 4 is switched on, the corresponding data line 31 is in a working state, and can receive the gray-scale voltage of the data driver chip 3. When the data line switch 4 is switched off, the corresponding data line 31 is in a non-working state, and cannot receive the gray-scale voltage of the data driver chip 3.

In the embodiment of Fig. 2B, the data line switch is arranged only between the data line 31 satisfying a first condition and the corresponding data pin, wherein the first condition is that the column of the data line 31 has no intersection with the window region.

Take n=5 for example. Provided that the window region (not shown in the drawing) has an intersection with three data lines in the middle, that is, the window region has an intersection with the second data line, the third data line and the fourth data line from left to right, then a data line switch 4 is arranged between the first data line and the data pin of the data driver chip 3, and a data line switch 4 is arranged between the fifth data line and the data pin of the data driver chip 3.

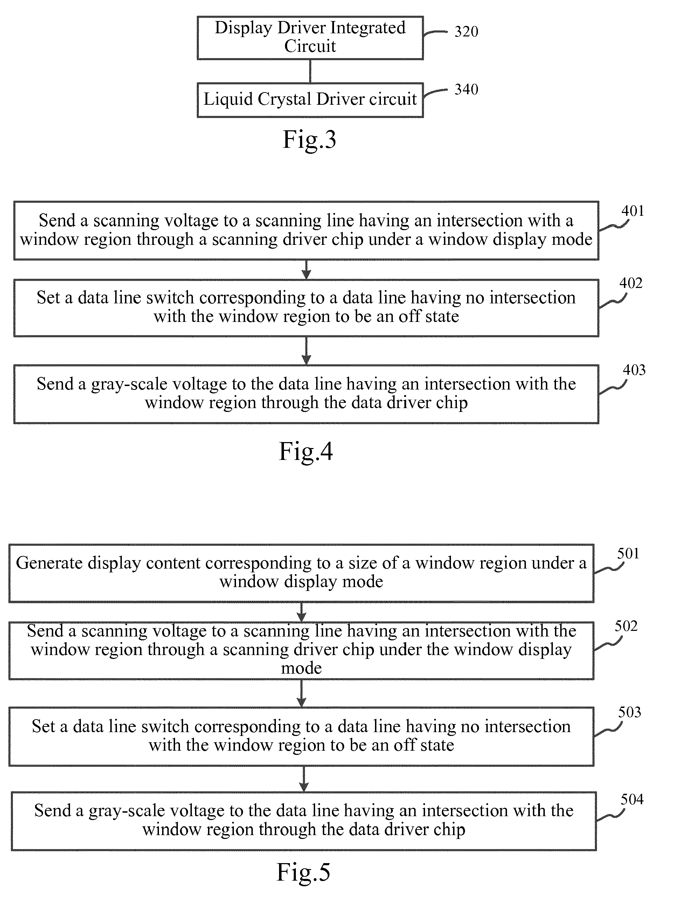

Fig. 3 is a structure diagram of a terminal, according to an exemplary embodiment of the present disclosure. The terminal includes a DDIC (Display Driver Integrated Circuit) 320 and a liquid crystal driver circuit 340.

The liquid crystal driver circuit 340 is the liquid crystal driver circuit as shown in Fig. 2A or Fig. 2B.

The DDIC 320 is electrically connected to the scanning driver chip, the data driver chip and the data line switch in the liquid crystal driver circuit 340respectively.

Fig. 4 is a flow chart of a display method, according to an exemplary embodiment of the present disclosure. In the embodiment, it is exemplary and explanatory to apply the display method to a terminal including the liquid crystal driver circuit as shown in Fig. 3. The method includes the following steps.

In step 401, a scanning voltage is sent to a scanning line having an intersection with a window region through a scanning driver chip under a window display mode.

Under the window display mode, a DDIC sends the scanning voltage to the scanning line having an intersection with the window region through the scanning driver chip. The window region refers to a partial region in a liquid crystal display where target content needs to be displayed. The window region is smaller than the entire display region of the liquid crystal display, and is a rectangle usually. The target content may be system time, short message notification, or the like.

In step 402, a data line switch corresponding to a data line having no intersection with the window region is set to be an off state.

Because the data line having no intersection with the window region does not need to work, the DDIC also sets the data line switch corresponding to the data line having no intersection with the window region to be an off state.

In step 403, a gray-scale voltage is sent to the data line having an intersection with the window region through the data driver chip.

When a scanning line is in a scanned state, the DDIC may also generate gray-scale voltages corresponding to each data line according to content to be displayed with regard to one row of liquid crystal units corresponding to this scanning line, and send the gray-scale voltage to the data line having an intersection with the window region through the data driver chip, so as to display the display content in this row.

The DDIC scans the scanning lines in each row for once, and then a frame of display content can be displayed.

It should be illustrated that the embodiment does not define the performing sequence relationship between step 402 and steps 401 and 403.

In conclusion, according to the display method provided by the embodiments of present disclosure, the scanning voltage is sent to the scanning line having an intersection with the window region through the scanning driver chip under the window display mode; the data line switch corresponding to the data line having no intersection with the window region is set into the off state; and the gray-scale voltage is sent to the data line having an intersection with the window region through the data driver chip; therefore, a power waste problem caused by that both the scanning lines and the data lines in a non-window region are in a working state under the window display mode is solved, and the following effects are achieved: only the scanning lines and the data lines having an intersection with the window region are in a working state under the window display mode, thus reducing the power consumption.

Fig. 5 is a flow chart of a display method, according to an exemplary embodiment of the present disclosure. In the embodiment, it is exemplary and explanatory to apply the display device to a terminal including the liquid crystal driver circuit as shown in Fig. 3. The method includes the following steps.

In step 501, display content corresponding to a size of a window region is generated under a window display mode.

Under the window display mode, a DDIC only needs to generate display content corresponding to the size of the window region. For instance, the size of the window region is 320 pixels * 240 pixels, then only display content of 320 pixels * 240 pixels needs to be generated.

In step 502, a scanning voltage is sent to a scanning line having an intersection with the window region through a scanning driver chip under the window display mode.

Under the window display mode, the DDIC reads a position of the window region, detects the scanning line having an intersection with the window region according to the position of the window region, and sends the scanning voltage to the scanning line having an intersection with the window region through the scanning driver chip.

For instance: provided that there are 10 scanning lines in the scanning driver chip from top to bottom, and the position of the window region is from the second row to the fifth row, then it only needs to send the scanning voltage to the second to fifth scanning lines through the scanning driver chip.

Optionally, the DDIC controls an output start position and output times of the scanning voltage through the scanning driver chip.

The output start position is a scanning pin corresponding to a first scanning line having an intersection with the window region according to a sequence from top to bottom; and the output times is equal to the number of the scanning lines having an intersection with the window region.

The output start position refers to the scanning line at the top end of the window region; and the output times refers to the number of the scanning lines totally occupied by the window region.

For instance: provided that there are 10 scanning lines in the scanning driver chip from top to bottom, and the position of the window region is located from the second row to the fifth row, then the output start position refers to the second scanning line, and the output times is three.

In step 503, a data line switch corresponding to a data line having no intersection with the window region is set to be an off state.

The data line having no intersection with the window region refers to the data line not occupied by the window region in the column direction; and setting the data line to be the off state is to make the data line in an open circuit state.

For instance: provided that there are 10 scanning lines in the scanning driver chip from top to bottom, and the window region is located from the third row to the sixth row, then the data lines having no intersection with the window region are the first, second and 7-10 data lines from left to right. That is, the data line switches corresponding to the data lines are set to be an off state.

In step 504, a gray-scale voltage is sent to the data line having an intersection with the window region through the data driver chip.

When a scanning line is in a scanned state, the DDIC may also generate gray-scale voltages corresponding to each data line according to content to be displayed with regard to a row of liquid crystal units corresponding to this scanning line, and send a gray-scale voltage to the data line having an intersection with the window region through the data driver chip, so as to display the display content in this row.

The DDIC scans the scanning lines in each row for once, an then a frame of display content can be displayed.

It should be illustrated that the embodiment does not define the performing sequence relationship between step 503 and steps 502 and 504.

In conclusion, according to the display method provided by the embodiment of present disclosure, the scanning voltage is sent to the scanning line having an intersection with the window region through the scanning driver chip under the window display mode; the data line switch corresponding to the data line having no intersection with the window region is set to be the off state; and the gray-scale voltage is sent to the data line having an intersection with the window region through the data driver chip; therefore, a power waste problem caused by that both the scanning line and the data line of a non-window region are in a working state under the window display mode is solved, and the following effects are achieved: only the scanning line and the data line having an intersection with the window region are in a working state under the window display mode, thus reducing the power consumption.

According to the embodiment, by only generating the display content having the same size as that of the window region without generating the display content of the entire screen, the calculation amount is also effectively reduced, and the power consumption is reduced.

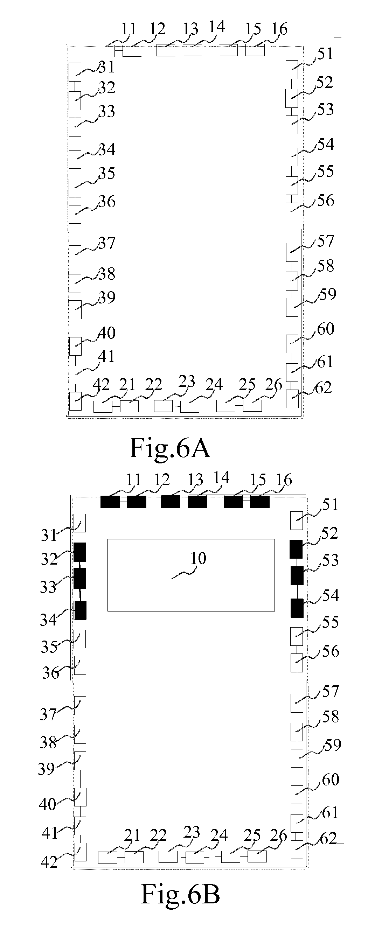

Fig. 6A to Fig. 6C are structure diagrams of a backlight circuit, according to one exemplary embodiment. As shown in Fig. 6A, the backlight circuit may include a row backlight, a row backlight string, a column backlight and a column backlight string.

Several row backlights are distributed in a row border region of a liquid crystal display.

Several column backlights are distributed in a column border region of the liquid crystal display.

At least two of several row backlights in the row border region of the liquid crystal display are connected in series so as to form a row backlight string.

At least two of several column backlights in the column border region of the liquid crystal display are connected in series so as to form a column backlight string.

In the embodiment of Fig. 6A, there are 12 row backlights in the row direction, which are row backlights 11 to 16 on the top border in the row direction, and row backlights 21 to 26 on the bottom border in the row direction. Every two adjacent row backlights in the row direction are connected in series to form a row backlight string; that is, the row backlight 11 and the row backlight 12, the row backlight 13 and the row backlight 14 as well as the row backlight 15 and the row backlight 16 on the top border in the row direction are respectively connected in series to form row backlight strings; and the row backlight 21 and the row backlight 22, the row backlight 23 and the row backlight 24 as well as the row backlight 25 and the row backlight 26 on the bottom border in the row direction are respectively connected in series to form row backlight strings, wherein the total six row backlight strings are uniformly distributed in the row border region of the liquid crystal display.

There are 24 column backlights in the column direction, which are column backlights 31 to 42 on a left border in the column direction and column backlights 51 to 62 on the right border in the column direction. Every three adjacent column backlights in the column direction are connected in series to form a column backlight string; that is, column backlights 31 to 33, column backlights 34 to 36, column backlights 37 to 39 and column backlights 40 to 42 on the left border in the column direction are respectively connected in series to form column backlight strings, wherein the total eight column backlight strings are uniformly distributed in the column border region of the liquid crystal display.

In the embodiment of Fig. 6B, only at least two of the row backlights satisfying a second condition are connected in series to form a row backlight string, wherein the second condition is that both the lighting positions of the at least two of the row backlights in the column direction from top to bottom or from bottom to top have an intersection with the window region, or, both have no intersection with the window region.

Both lighting positions of two row backlights in the column direction from top to bottom or from bottom to top having an intersection with the window region is taken as an example. The window region 10 has an intersection with all the lighting positions (from top to bottom in the column direction) of row backlights 11 to 16 on the top border in the row direction of the liquid crystal display, then the row backlights 11 to 16 may be connected in series to form a row backlight string.

The window region 10 has no intersection with all the lighting positions (from bottom to top in the column direction) of row backlights 21 to 26 on the bottom border in the row direction of the liquid crystal display, then the row backlights 21 to 26 are connected in series to form a row backlight string.

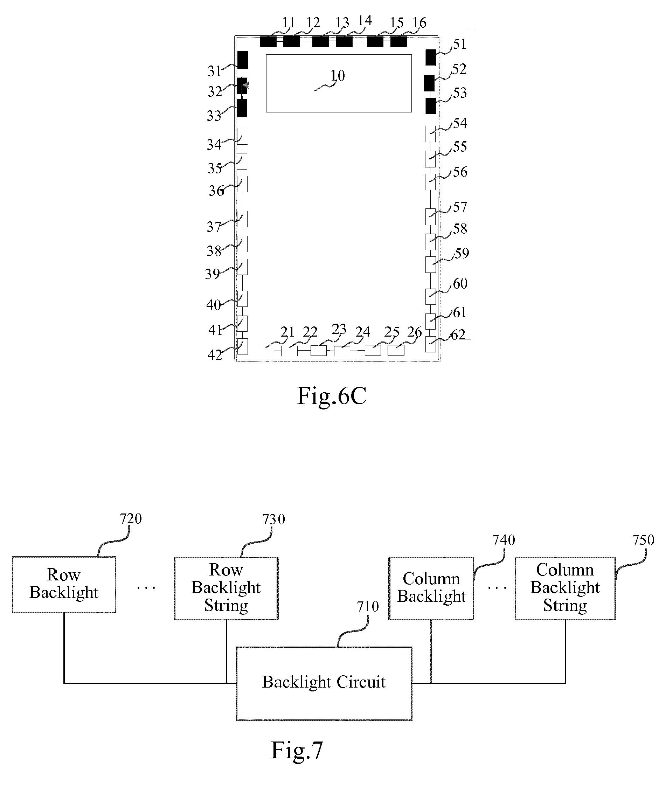

In the embodiment of Fig. 6C, only at least two of the column backlights satisfying a third condition are connected in series to form a column backlight string, wherein the third condition is that both the lighting positions of the at least two of the column backlights in the row direction have an intersection with the window region, or, both have no intersection with the window region.

Both lighting positions of three column backlights in the row direction having an intersection with the window region is taken as an example. The window region 10 has an intersection with all the lighting positions (from left to right in the row direction) of row backlights 31 to 33 on the left border in the column direction of the liquid crystal display, then the row backlights 31 to 33 are connected in series to form a row column string; and column backlights 34 to 42 whose lighting positions have no intersection with the window region 10 are connected in series to form a column backlight string.

The window region 10 has an intersection with all the lighting positions (from right to left in the row direction) of row backlights 51 to 53 on the right border in the column direction of the liquid crystal display, then the row backlights 51 to 53 are connected in series to form a column backlight string; and column backlights 54 to 62 whose lighting positions have no intersection with the window region 10 are connected in series to form a column backlight string.

Optionally, the row backlights with the lighting position having an intersection with the window region are connected in series to form a row backlight string, and the row backlights having no intersection with the window region are connected in series to form another row backlight string. Meanwhile, the column backlights with the lighting positions having an intersection with the window region are connected in series to form a column backlight string, and the column backlights having no intersection with the window region are connected in series to form another row backlight string.

Optionally, row backlights and column backlights whose lighting positions are intersected with the window region are all connected in series to form a backlight string; and row backlights and column backlights whose lighting positions are not intersected with the window region are all connected in series to form a backlight string.

It should be illustrated that the embodiment does not define the sizes, arrangement quantity and arrangement density of the row backlights and the column backlights. Different technicians may set them independently according to the demand of detection precision.

Fig. 7 is a structure diagram of a terminal, according to an exemplary embodiment of the present disclosure. The terminal includes a backlight circuit 710, a row backlight 720, a row backlight string 730, a column backlight 740 and a column backlight string 750.

The backlight circuit is connected in series to a single backlight and backlight string as shown in any of Fig. 6A to Fig. 6C.

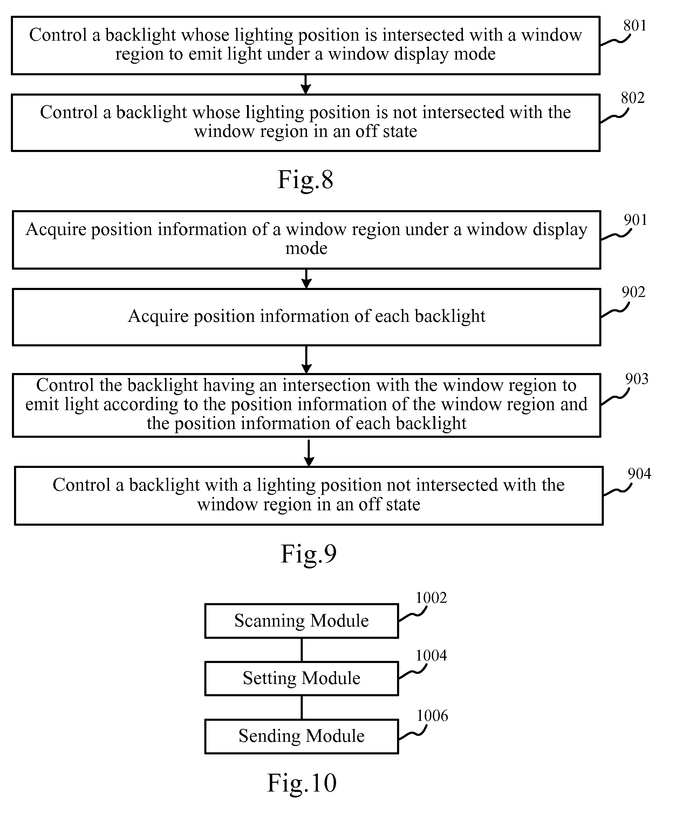

Fig. 8 is a flow chart of a display method, according to an exemplary embodiment of the present disclosure. In the embodiment, it is exemplary and explanatory to apply the display method to a terminal including the backlight circuit as shown in Fig. 7. The method includes the following steps.

In step 801, under a window display mode, a backlight with a lighting position intersected with a window region is controlled to emit light.

Under the window display mode, the backlight circuit controls a row backlight string and a column backlight string having an intersection with the window region to respectively emit light. The window region refers to a partial region in a liquid crystal display for displaying target content. The window region is smaller than the entire display region of the liquid crystal display, and is rectangular usually. The target content may be system time, short message notification, or the like.

In step 802, a backlight with a lighting position having no intersection with the window region is controlled to be an off state.

The backlight is a single backlight, and/or a backlight in a row backlight string, and/or a backlight in a column backlight string.

Because neither of the row backlight strings and the column backlight strings having no intersection with the window region need to work, the backlight circuit also sets the row backlight strings and the column backlight string having no intersection with the window region to be an off state.

In conclusion, according to the display method provided by the embodiment of present disclosure, the backlight with the lighting position having an intersection with the window region is controlled to emit light under the window display mode; and the backlight with the lighting position having no intersection with the window region is controlled in an off state; therefore, a power waste problem caused by that both the scanning line and the data line of a non-window region are all in a working state under the window display mode is solved, and the effect of only making the scanning line and the data line having an intersection with the window region in a working state under the window display mode is achieved, thus reducing the power consumption.

Fig. 9 is a flow chart of a display method, according to an exemplary embodiment of the present disclosure. In the embodiment, it is exemplary and explanatory to apply the display method to a terminal including the backlight circuit as shown in Fig. 7. The method includes the following steps.

In step 901, position information of a window region is acquired under a window display mode.

The window region refers to a partial region in a liquid crystal display needing to display target content. The window region is smaller than the entire display region of the liquid crystal display, and is a rectangle usually. The target content may be system time, short message notification, or the like.

In step 902, position information of each backlight is acquired.

The position information of each row backlight and column backlight are acquired through a backlight circuit, which facilitates controlling a row backlight and a column backlight having an intersection with the window region to emit light.

In step 903, a backlight having an intersection with the window region is controlled to emit light according to the position information of the window region and the position information of each backlight.

The backlight corresponding to the position of the backlight having an intersection with the window region is controlled to emit light according to the position information of the window region and the position information of each backlight.

In step 904, a backlight with a lighting position having no intersection with the window region is controlled in an off state.

The backlight is a single backlight, and/or a backlight in a row backlight string, and/or a backlight in a column backlight string.

Because neither of the row backlight strings and the column backlight strings having no intersection with the window region need to work, the backlight circuit also sets the row backlight strings and the column backlight string having no intersection with the window region into an off state.

In conclusion, according to the display method provided by the embodiment of present disclosure, the position information of the window region is acquired; the position information of each backlight is acquired; and the backlight having an intersection with the window region is controlled to emit light according to the position information of the window region and the position information of each backlight; therefore, a power waste problem caused by that both the scanning line and the data line in a non-window region are all in a working state under the window display mode is solved, and the effect of only making the scanning line and the data line having an intersection with the window region in a working state under the window display mode is achieved, thus reducing the power consumption.

It should be illustrated that the display method shown in the exemplary embodiment of the present disclosure may be applied to the terminal including the liquid crystal driver circuit as shown in Fig. 3, or, in the terminal including the backlight circuit as shown in Fig. 7, or in the terminal including both the liquid crystal driver circuit as shown in Fig. 3 and the backlight circuit as shown in Fig. 7.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

Fig. 10 is a block diagram of a display device, according to an exemplary embodiment. As shown in Fig. 10, illustrations are given by applying the display device to a terminal including the liquid crystal driver circuit as shown in Fig. 3. The display device may include: a scanning module 1002, a setting module 1004, and a sending module 1006.

The scanning module 1002 is configured to send a scanning voltage to a scanning line having an intersection with a window region through a scanning driver chip under a window display mode;

The setting module 1004 is configured to set a data line switch corresponding to a data line having no intersection with the window region into an off state; and

The sending module 1006 is configured to send a gray-scale voltage to the data line having an intersection with the window region through the data driver chip.

In conclusion, according to the display device provided by the embodiment of present disclosure, the scanning voltage is sent to the scanning line having an intersection with the window region through the scanning driver chip under the window display mode; the data line switch corresponding to the data line having no intersection with the window region is set into the off state; and the gray-scale voltage is sent to the data line having an intersection with the window region through the data driver chip; therefore, a power waste problem caused by that both the scanning line and the data line of a non-window region are all in a working state under the window display mode is solved, and the effect of only making the scanning line and the data line having an intersection with the window region in a working state under the window display mode is achieved, thus reducing the power consumption.

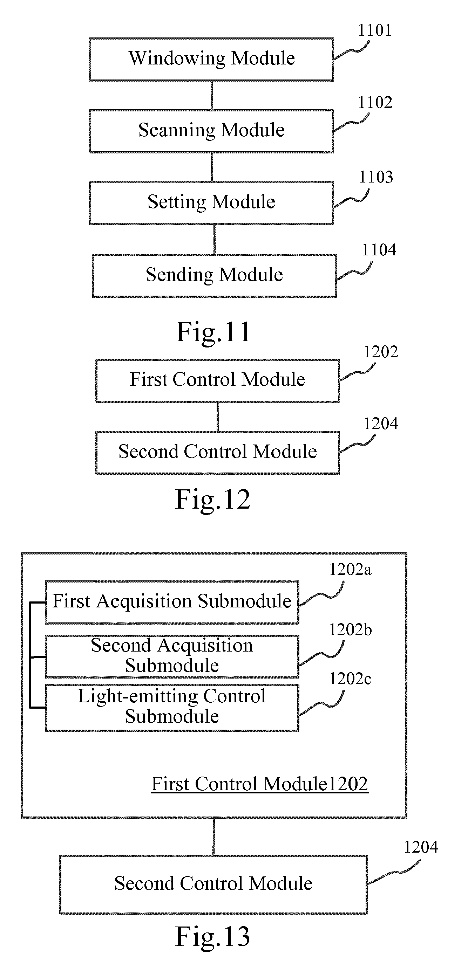

Fig. 11 is a block diagram of a display device, according to an exemplary embodiment. As shown in Fig. 11, illustrations are given by applying the display device to a terminal including the liquid crystal driver circuit as shown in Fig. 3. The display device may include a windowing module 1101, a scanning module 1102, a setting module 1103 and a sending module 1104.

The windowing module 1101 is configured to generate display content corresponding to a size of the window region under a windowing module.

The scanning module 1102 is configured to send a scanning voltage to a scanning line having an intersection with a window region through a scanning driver chip.

Under the window display mode, a DDIC reads a position of the window region, detects the scanning line having an intersection with the window region according to the position of the window region, and sends the scanning voltage to the scanning line having an intersection with the window region through the scanning driver chip.

Optionally, the DDIC controls an output start position and output times of the scanning voltage through the scanning driver chip.

The output start position is a scanning pin corresponding to a first scanning line having an intersection with the window region according to a sequence from top to bottom; and the output times is equal to the number of the scanning lines having an intersection with the window region.

The setting module 1103 is configured to set a data line switch corresponding to a data line having no intersection with the window region into an off state.

The sending module 1104 is configured to send a gray-scale voltage to the data line having an intersection with the window region through the data driver chip.

When a scanning line is in a scanned state, the DDIC may generate gray-scale voltages corresponding to each data line according to content to be displayed with regard to a row of liquid crystal units corresponding to this scanning line, and send a gray-scale voltage to the data line having an intersection with the window region through the data driver chip, so as to display the display content of this row.

In conclusion, according to the display device provided by the embodiment of present disclosure, the scanning voltage is sent to the scanning line having an intersection with the window region through the scanning driver chip under the window display mode; the data line switch corresponding to the data line having no intersection with the window region is set into the off state; and the gray-scale voltage is sent to the data line having an intersection with the window region through the data driver chip; therefore, a power waste problem caused by that both the scanning line and the data line of a non-window region are all in a working state under the window display mode is solved, and the effect of only making the scanning line and the data line having intersection with the window region in a working state under the window display mode is achieved, thus reducing the power consumption.

Fig. 12 is a block diagram of a display device, according to an exemplary embodiment of the present disclosure. In the present embodiment, illustrations are given by applying the display device to a terminal including the backlight circuit as shown in Fig. 7. The device includes a first control module 1202 and a second control module 1204.

The first control module 1202 is configured to control a backlight with a lighting position having an intersection with a window region to emit light under a window display mode.

The second control module 1204 is configured to control a backlight with a lighting position having no intersection with the window region to be in an off state.

The backlight is a single backlight, and/or a backlight in a row backlight string, and/or a backlight in a column backlight string.

In conclusion, according to the display device provided by the embodiment of present disclosure, the backlight with the lighting position intersected with the window region is controlled to emit light under the window display mode; and the backlight with the lighting position not intersected with the window region is controlled in an off state; therefore, a power waste problem caused by that both the scanning line and the data line of a non-window region are all in a working state under the window display mode is solved, and the effect of only making the scanning line and the data line having intersection with the window region in a working state under the window display mode is achieved, thus reducing the power consumption.

Fig. 13 is a block diagram of a display device, according to an exemplary embodiment of the present disclosure. In the embodiment, illustrations are given by applying the display device to a terminal including the backlight circuit as shown in Fig. 7. The device includes a first control module 1202 and a second control module 1204.

The first control module 1202 is configured to control a backlight with a lighting position having an intersection with a window region to emit light under a window display mode.

In the embodiment, the first control module 1202 may include: a first acquisition submodule 1202a, a second acquisition submodule 1202b, and a light-emitting control submodule 1202c.

The first acquisition submodule 1202a is configured to acquire position information of the window region.

The second acquisition submodule 1202b is configured to acquire position information of each backlight.

The light-emitting control submodule 1202c is configured to control a backlight having an intersection with the window region to emit light according to the position information of the window region and the position information of each backlight.

The second control module 1204 is configured to control a backlight with a lighting position having no intersection with the window region to be in an off state.

The backlight is a single backlight, and/or a backlight in a row backlight string, and/or a backlight in a column backlight string.

In conclusion, according to the display device provided by the embodiment of present disclosure, the position information of the window region is acquired; the position information of each backlight is acquired; and the backlight having an intersection with the window region is controlled to emit light according to the position information of the window region and the position information of each backlight; therefore, a power waste problem caused by that both the scanning line and the data line of a non-window region are all in a working state under the window display mode is solved, and the effect of only making the scanning line and the data line having intersection with the window region in a working state under the window display mode is achieved, thus reducing the power consumption.

It should be illustrated that the display device shown in the exemplary embodiment of the present disclosure may be applied to the terminal including the liquid crystal driver circuit as shown in Fig. 3, or, in the terminal including the backlight circuit as shown in Fig. 7, or in the terminal including both the liquid crystal driver circuit as shown in Fig. 3 and the backlight circuit as shown in Fig. 7.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A liquid crystal driver circuit (340) comprising: a scanning driver chip (2), m scanning lines (21) distributed in rows, a data driver chip (3), n data lines (31) distributed in columns, m*n liquid crystal units (1) distributed in rows and columns, and at least one data line switch (4);
the scanning driver chip (2) comprising m scanning pins, and the scanning pins being connected to respective corresponding scanning lines (21);
each of the scanning lines (21) being connected to gates (13) of the liquid crystal units (1) in the corresponding row;
the data driver chip (3) comprising n data pins, and the data pins being connected to respective corresponding data lines (31);
each of the data lines (31) being connected to drains (14) of the liquid crystal units (1) in the corresponding column; and
the data line switch (4) being arranged between at least one of the data lines (31) and the corresponding data pin.

2. The liquid crystal driver circuit (340) according to claim 1, wherein
the number of the data line switches (4) is n, and the data line switches (4) are arranged between each of the data lines (31) and the corresponding data pin.

3. The liquid crystal driver circuit (340) according to claim 1 or 2, wherein
the data line switch (4) is arranged between a data line (31) satisfying a first condition and the corresponding data pin;
the first condition being that a column where the data line (31) is located has no intersection with a window region.

4. A backlight circuit, comprising: a plurality of row backlights (11-16; 21-26) distributed in a row border region of a liquid crystal display and a plurality of column backlights (31-42; 51-62) distributed in a column border region of the liquid crystal display;
at least two of the row backlights (11-16; 21-26) being connected in series to form a row backlight string (730);
and/or,
at least two of the column backlights (31-42; 51-62) being connected in series to form a column backlight string (750).

5. The backlight circuit according to claim 4, wherein
at least two of the row backlights (11-16; 21-26) satisfying a second condition are connected in series to form a row backlight string (730);
the second condition being that both lighting positions of the at least two of the row backlights (11-16; 21-26) in a column direction have an intersection with a window region, or have no intersection with a window region.

6. The backlight circuit according to claim 4 or 5, wherein
at least two of the column backlights (31-42; 51-62) satisfying a third condition are connected in series to form a column backlight string (750);
the third condition being that both lighting positions of the at least two of the column backlights (31-42; 51-62) in a row direction have an intersection with a window region, or have no intersection with a window region.

7. The backlight circuit according to any of claims 4 to 6, wherein
at least two of the row backlights satisfying a second condition are connected in series to form a row backlight string;
the second condition being that both lighting positions of the at least two of the row backlights in a column direction from top to bottom or from bottom to top have an intersection with a window region, or have no intersection with a window region.

8. A terminal, comprising:
a display driver integrated circuit (320) and a liquid crystal driver circuit (340) connected to the display driver integrated circuit (320), the liquid crystal driver circuit (340) being the liquid crystal driver circuit (340) according to any one of claims 1 to 3;
and/or,
a backlight circuit connected to the backlight, the backlight circuit being the backlight circuit according to any one of claims 4 to 7.

9. A display method applied to a terminal comprising the liquid crystal driver circuit (340) according to any one of claims 1 to 3, comprising:
sending (401, 502) a scanning voltage to the scanning line (21) having an intersection with a window region through the scanning driver chip (2) under a window display mode;
setting (402, 503) the data line switch (4) corresponding to the data line (31) having no intersection with the window region to be an off state; and
sending (403, 504) a gray-scale voltage to the data line (31) having an intersection with the window region through the data driver chip (3).

10. The method according to claim 9, wherein sending (401, 502) the scanning voltage to the scanning line (21) having an intersection with the window region through the scanning driver chip (2) comprises:
controlling an output start position and output times of the scanning voltage through the scanning driver chip (2);
the output start position being a scanning pin corresponding to a first scanning line having an intersection with the window region according to a sequence from top to bottom; and the output times being equal to the number of the scanning lines (21) having an intersection with the window region.

11. The method according to claim 9 or 10, wherein sending (403, 504) the gray-scale voltage to the data line (31) having an intersection with the window region through the data driver chip (3) comprises:
generating (501) display content corresponding to a size of the window region; and
sending (504) the gray-scale voltage corresponding to the display content to each of the data lines (31) having an intersection with the window region through the data driver chip (3).

12. A display method applied to a terminal comprising the backlight circuit according to any one of claims 4 to 7, comprising:
controlling (801) a backlight whose lighting position has an intersection with a window region to emit light under a window display mode; and
controlling (802, 904) a backlight whose lighting position has no intersection with the window region to be in an off state;
the backlight being a single backlight, and/or a backlight in the row backlight string (730), and/or a backlight in the column backlight string (750).

13. The method according to claim 12, wherein controlling (801) the backlight whose lighting position has an intersection with the window region to emit light comprises:
acquiring (901) position information of the window region;
acquiring (902) position information of each of the backlights; and
controlling (903) the backlight having an intersection with the window region to emit light according to the position information of the window region and the position information of each of the backlights.

14. A display device applied to a terminal comprising the liquid crystal driver circuit (340) according to any one of claims 1 to 3, the display device comprising:
a scanning module (1002) configured to send a scanning voltage to the scanning line (21) having an intersection with a window region through a scanning driver chip (2) under a window display mode;
a setting module (1004) configured to set the data line switch (4) corresponding to the data line (31) having no intersection with the window region to be an off state; and
a sending module (1006) configured to send a gray-scale voltage to the data line (31) having an intersection with the window region through the data driver chip (3).

15. A display device applied to a terminal comprising the backlight circuit according to any one of claims 4 to 7, the display device comprising:
a first control module (1202) configured to control a backlight whose lighting position has an intersection with a window region to emit light under a window display mode; and
a second control module (1204) configured to control a backlight whose lighting position has no intersection with the window region to be in an off state;
the backlight being a single backlight, and/or a backlight in a row backlight string (730), and/or a backlight in a column backlight string (750).
